# EUROPEAN PATENT SPECIFICATION

(11) **EP 3 586 313 B1**
(45) Date of publication and mention of the grant of the patent: **18.11.2026**
(21) Application number: 18705768.2
(22) Date of filing: 31.01.2018
(51) Int. Cl.: G06T 15/50, G06T 19/00

(54) **METHOD, SYSTEM AND APPARATUS FOR VISUAL EFFECTS**
VERFAHREN, SYSTEM UND VORRICHTUNG FÜR VISUELLE EFFEKTE
PROCÉDÉ, SYSTÈME ET APPAREIL POUR EFFETS VISUELS

(30) Priority: 27.02.2017 US 201762463794 P
(43) Date of publication of application: 01.01.2020
(73) Proprietor: THOMSON LICENSING, 35510 Cesson-Sévigné (FR)
(72) Inventor: KNEALE, Angus John, New York, NY 10013 (US); WONG, Fawna Mae, Los Angeles, CA 90025 (US); MANH, Michael Khai, Brooklyn, NY 11237 (US); BAERTSOEN, Vincent Sebastien, Brooklyn, NY 11211 (US); RENAUD-HOUDE, Eric, Brooklyn, NY 11211 (US)
(74) Representative: Vidon Brevets & Stratégie
(86) International application number: PCT/US2018/016060
(87) International publication number: WO 2018/156321

(56) References cited:
- JP-A- 2016 220 051
- PETER SUPAN, INES STUPPACHER, MICHAEL HALLER: "Image Based Shadowing in Real-Time Augmented Reality", vol. 5, no. 3, 2006, pages 1 - 7, XP002779853, Retrieved from the Internet <URL:https://pdfs.semanticscholar.org/0ddc/0223ddd7aaeabc004e6f9d67515145932bb2.pdf> [retrieved on 20180409]
- F. PERAZZI, A. SORKINE-HORNUNG, H. ZIMMER, P. KAUFMANN, O. WANG, S. WATSON, M. GROSS: "Panoramic Video from Unstructured Camera Arrays", EUROGRAPHICS 2015, vol. 34, no. 2, 2015, XP002779854, Retrieved from the Internet <URL:https://pdfs.semanticscholar.org/29e5/800160e14605cf12e826d7135c99ef707e1e.pdf> [retrieved on 20180409]
- CLAUS B ; MADSEN ET AL: "Aalborg Universitet Real-Time Image-Based Lighting for Outdoor Augmented Reality under Dynamically Changing Illumination Conditions Real-Time Image-Based Lighting for Outdoor Augmented Reality under Dynamically Changing Illumination Conditions REAL-TIME IMAGE BASED LIGHTING FOR OUTDOOR AUGMENTED REA", PROCEEDINGS: INTERNATIONAL CONFERENCE ON GRAPHICS THEORY AND APPLICATIONS PROCEEDINGS: INTERNATIONAL CONFERENCE ON GRAPHICS THEORY AND APPLICATIONS, 1 January 2006 (2006-01-01), pages 364 - 371, XP055300591, Retrieved from the Internet <URL:http://vbn.aau.dk/ws/files/4968754/grapp06.pdf> [retrieved on 20180409]

## Description

### TECHNICAL FIELD

The present disclosure involves a method, system and apparatus for creating visual effects for applications such as linear, interactive experiences, augmented reality or mixed reality.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Creating visual effects for applications such as film, interactive experiences, augmented reality (AR) and/or mixed reality applications may involve replacing a portion of an image or video content captured in a real-world situation with alternative content. For example, a camera may be used to capture a video of a particular model of automobile. However, a particular use of the video may require replacing the actual model automobile with a different model while retaining details of the original environment such as surrounding or background scenery and details. Modern image and video processing technology permits making such modifications to an extent that the resulting image or video with the replaced portion, e.g., the different model automobile, may appear at least somewhat realistic. However, creating a sufficient degree of realism typically requires significant post-processing effort, i.e., in a studio or visual effects facility, after the image or video capture has been completed. Such effort may include an intensive and extensive manual effort by creative personnel such as graphic artists or designers with a substantial associated time and cost investment.

**In** addition to the cost and time required by post processing, adding realism by post processing presents numerous challenges during the initial image or video capture. For example, because effects are added later to create the final images or video, a camera operator or director cannot see the final result while they are behind the camera capturing images or video. That is, a cameraman or director cannot see what they are actually shooting with respect to the final result. This presents challenges with regard to issues such as composition and subject framing. There may be a lack of understanding, or an inaccurate understanding, as to how the subject fits into the final scene. Guesswork is required to deal with issues such as the effect or impact of surrounding lighting conditions on the final result, e.g., is the subject properly lit? Thus, there is a need to be able to visualize in-camera the result of editing the actual video with the augmentation process. "Image Based Shadowing in Real-Time Augmented Reality" vol. 5, no. 3, 1-7 by PETER SUPAN, INES STUPPACHER, and MICHAEL HALLER discloses image based shadowing in Real-Time Augmented Reality.

### SUMMARY

In general, an embodiment comprises a method or system or apparatus aimed to visualization of photorealistic effects in real time during a shoot. The invention is defined by independent claim 1 to a method, independent claim 2 to an apparatus, independent claim 3 to a system and independent claim 14 to a non-transitory computer readable medium. Aspects of the invention are defined in the dependent claims.

### BRIEF DESCRIPTION OF THE DRAWING

The present principles can be readily understood by considering the detailed description below in conjunction with the accompanying drawings wherein:
Figure 1 illustrates, in block diagram form, a system or apparatus to produce visual effects in accordance with the present principles;
Figure 2 illustrates, in block diagram form, a system or apparatus to produce visual effects in accordance with the present principles;
Figure 3 illustrates an exemplary method in accordance with the present principles; and
Figures 4 through 13 illustrate aspects of various exemplary embodiments in accordance with the present principles.

It should be understood that the drawings are for purposes of illustrating exemplary aspects of the present principles and are not necessarily the only possible configurations for illustrating the present principles. To facilitate understanding, throughout the various figures like reference designators refer to the same or similar features.

### DETAILED DESCRIPTION

Embodiments of the present disclosure will be described herein below with reference to the accompanying drawings. **In** the following description, well-known functions or constructions are not described in detail to avoid obscuring the present disclosure in unnecessary detail.

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for instructional purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

In general, an embodiment in accordance with the present principles comprises a method or system or apparatus providing visualization of photorealistic effects in real time during a shoot. Visual effects, photorealistic effects, virtual objects and similar terminology as used herein are intended to broadly encompass various techniques such as computer-generated images or imagery (CGI), artist's renderings, images of models or objects that may be captured or generated and inserted or included in scenes being shot or produced. Shooting visual effects provides directors and directors of photography a visualization challenge. When shooting, directors and directors of photography need to know how virtual elements will be framed up, whether they are lit correctly, what can be seen in the reflections. An aspect of the present principles involves addressing the described problem.

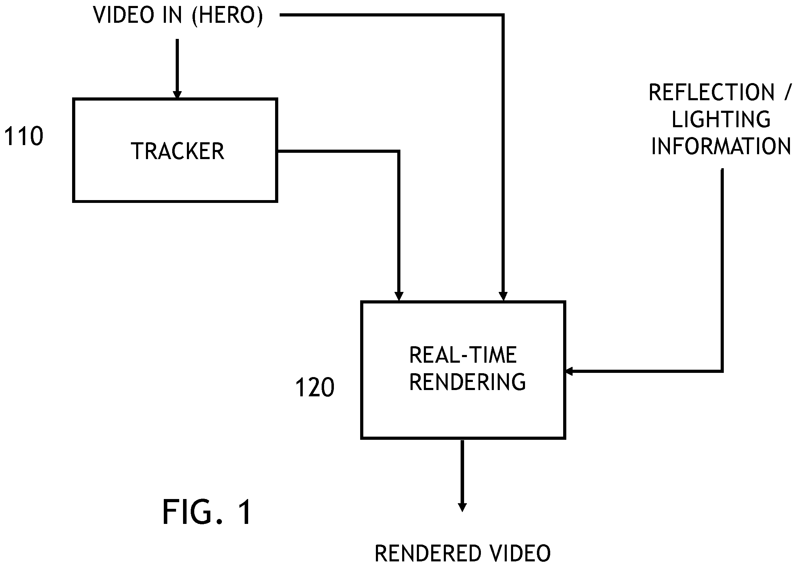

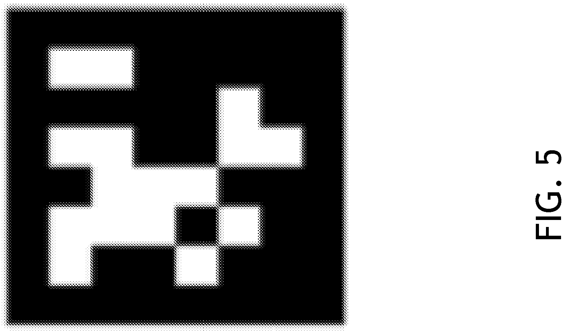

An exemplary embodiment of a system and apparatus in accordance with the present principles is shown in Figure 1. In Figure 1, video signal VIDEO IN is received from a camera such as a so-called "hero" camera which captures video of the activity or movement of an object that is the subject of a particular shoot. Signal VIDEO IN includes information that enables tracking the object, hereinafter referred to as the "tracked object". Tracking may be accomplished in a variety of ways. For example, the tracked object may include various markings or patterns that facilitate tracking. An exemplary embodiment of tracking is explained further below in regard to Figure 5.

Also in Figure 1, a signal REFLECTION / LIGHTING INFORMATION is received. This signal may be generated by one or more sensors or cameras, i.e. an array of sensors or cameras, arranged in proximity to or on the tracked object as explained in more detail below. Signal REFLECTION / LIGHTING INFORMATION provides a representation in real time of reflections on the tracked object and/or the lighting environment of the tracked object. A processor 120 receives the tracking information from TRACKER 110, signal VIDEO IN, and signal REFLECTION / LIGHTING INFORMATION and processes these inputs to perform real time rendering and produce a rendered output signal. The real time rendering operation performed by processor 120 includes replacing in real time the tracked object in the video of signal VIDEO IN with a virtual object such that the output or RENDERED VIDEO signal represents in real time the virtual object moving in the same or substantially the same manner as the tracked object and visually appearing to have the surroundings, reflections and lighting environment of the tracked object. Thus, signal RENDERED VIDEO in Figure 1 provides a signal suitable for visual effects on linear film and augmented and/or mixed reality.

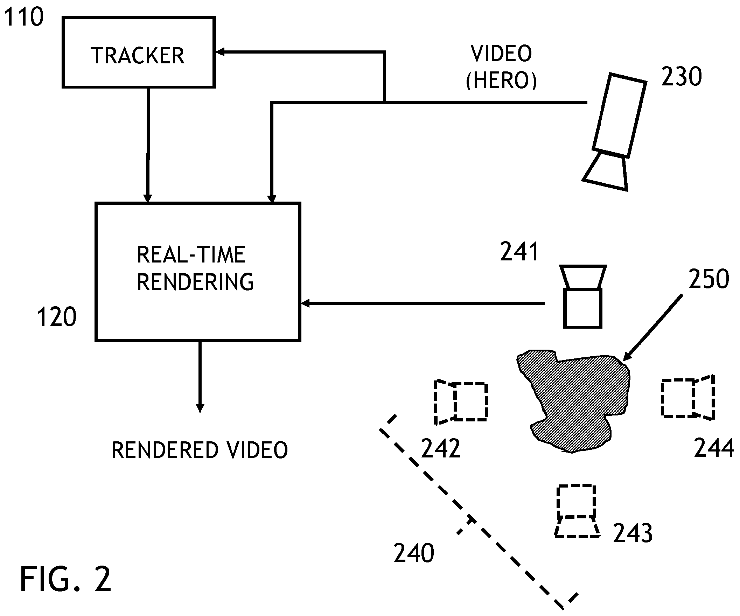

In more detail, Figure 2 shows the features of Figure 1 and illustrates camera 230, e.g., a hero camera, a tracked object 250 and an array 240 of a plurality of cameras 241 to 244. Object 250 may be moving and camera 230 captures information enabling tracking of object 250 as described below. Cameras or sensors 242 to 244 are illustrated in phantom indicating that they are optional. Also, although the exemplary embodiment of array 240 is illustrated as including one to four cameras or sensors, array 240 may include more than four cameras or sensors. Typically, an increased number of cameras or sensors may improve the accuracy of the reflections and lighting information. However, additional cameras or sensors also increases the amount of data that must be processed in real time.

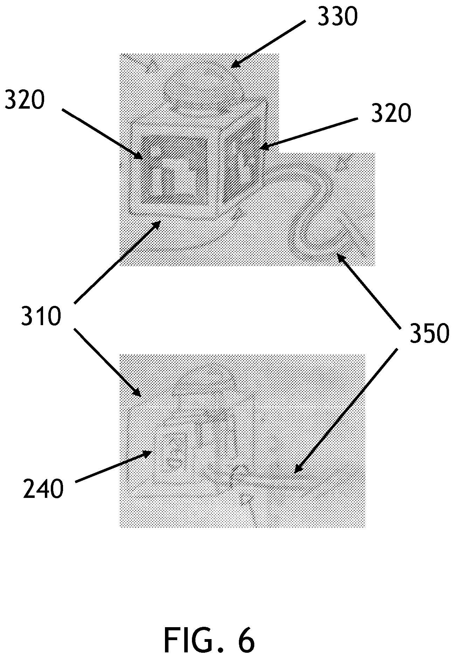

Figure 6 shows an exemplary embodiment of aspects of the exemplary systems of Figures 1 and 2. In Figure 6, cameras such as in array 240 of Figure 2 are shown arranged in a frame or container 310 intended to be mounted to or in proximity to the tracked object. Various types of cameras or sensors may be used of which professional quality cameras such as those from RED Digital Cinema are an example. Lens 330 provides image input to camera array 240. Lens 330 may be a "fisheye" type lens enabling 360-degree panoramic capture of the surroundings by array 240 to ensure complete and accurate capture of reflection and lighting environment information of the tracked object. Image or video information from array 240 is communicated to a processor such as processor 120 in Figure 1 or Figure 2 via a connection such as wired connection 350 in the exemplary embodiment illustrated in Figure 6. Other embodiments may implement connection 350 using wireless technology such as that based on WiFi standards well known to one skilled in the art along with or in place of wired connection 350 shown in Figure 6.

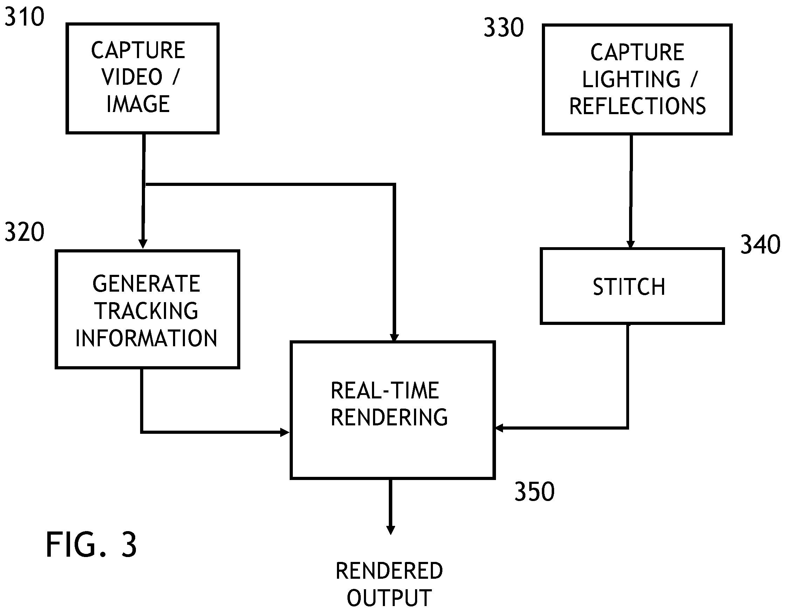

Turning now to Figure 3, an exemplary method in accordance with the present principles is illustrated. In Figure 3, an exemplary method produces output signal RENDERED OUPUT providing a version of a video feed produced by video capture, e.g., by a hero camera, at step 310. The video feed produced by video capture at step 310 represents an object that is tracked, i.e., a tracked object, by the camera. The tracked object includes a camera or sensor array such as array 240 described above that provides for capturing reflections and/or the lighting environment of the tracked object at step 330. Signal RENDERED OUTPUT represents a version of the video feed produced at step 310 augmented in real time to replace the tracked object with a virtual object appearing photo-realistically in the environment of the tracked object. The video feed produced at step 310 from a first camera, such as a hero camera is processed at step 320 to generate tracking information. Tracking the object and generating tracking information at step 320 may comprise calibrating a lens of the camera producing the video feed, e.g., a hero camera, using fiducials that are affixed to the tracked object.

An exemplary embodiment of the processing involved is described in more detail below. As described above, the lighting environment and reflections information produced at step 330 includes a plurality of signals produced by a corresponding plurality of cameras that is, by an array of a plurality of cameras mounted on the object. Each of the camera signals may represent a portion of the lighting environment or reflections on the tracked object. At step 340, the content of the multiple signals are stitched together in real time to produce a signal representing the totality of reflections and/or lighting environment of the tracked object. At step 350, a processor performs real time rendering to produce an augmented video output signal RENDERED OUTPUT. The processing at step 350 comprises processing the video feed produced at step 310, the tracking information produced at step 320 and the stitched reflections/lighting signal produced at step 340 to replace the tracked object in the video feed with a virtual object having reflections and/or a lighting environment matching that of the tracked object. In accordance with an aspect of the present principles, an embodiment of the rendering processing occurring at step 350 may comprise producing a positional matrix representing a placement of the virtual object responsive to the tracking information and generating signal RENDERED OUTPUT including the virtual object responsive to the positional matrix. In accordance with another aspect, processing at step 350 may comprise processing the stitched output signal to perform image-based lighting in the rendered signal. In accordance with another aspect, the stitching process at step 340 may occur in a processor in the tracked object such that step 340 is locationally distinct, i.e., in a different location, from the camera generating the video feed at step 310 and from the processing occurring at step 320 and 350. If so, step 340 may further include communicating the stitched signal produced by step 340 to the processor performing real-time rendering at step 350. Such communication may occur by wire and/or wirelessly.

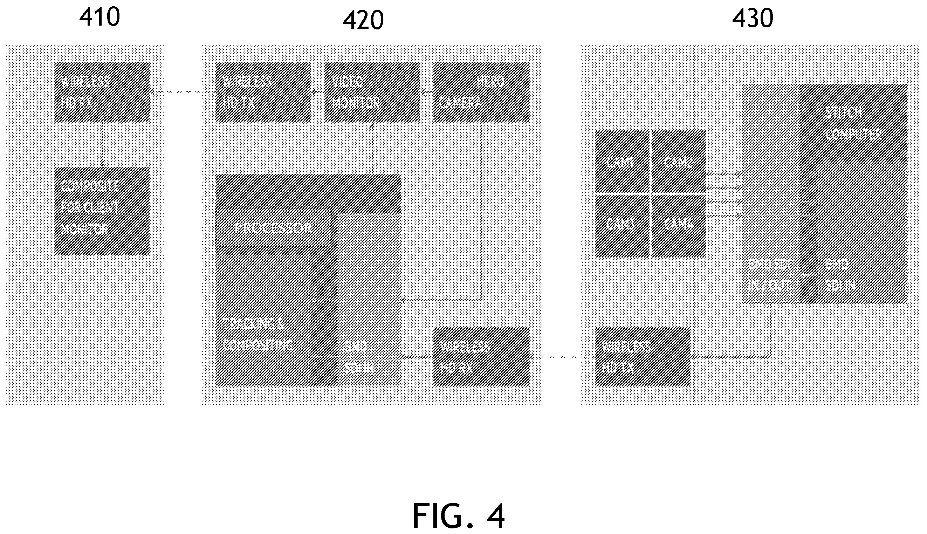

Figure 4 illustrates another exemplary embodiment of a system or apparatus in accordance with the present principles. In Figure 4, block 430 illustrates an embodiment of a tracked object which includes a plurality of cameras CAM1, CAM2, CAM3 and CAM4 generating the above-described plurality of signals representing reflections and or lighting environment of the tracked object, a stitch computer for stitching together the plurality of signals produced by the plurality of cameras to produce a stitched signal, and a wireless transmitter capable of transmitting a high definition (HD) stitched signal in real time wirelessly to unit 420. The plurality of cameras CAM1, CAM2, CAM3 and CAM4 may correspond to camera array 240 described above and may be configured and mounted in an assembly such as that shown in Figure 6 which may be mounted to a tracked object. Also in Figure 4, unit 420 includes the hero camera producing the video feed, a wireless receiver receiving the stitched signal produced and wirelessly transmitted from unit 430, and a processor performing operations in real time including tracking as described above and compositing of the virtual object into the video feed to produce the rendered augmented signal. Unit 420 may also include a video monitor for displaying the rendered output signal, e.g., to enable the person operating the hero camera to see the augmented signal and evaluate whether framing, lighting etc. are as required. Unit 420 may further include a wireless high definition transmitter for wirelessly communicating the augmented signal to unit 410 where a wireless receiver receives the augmented signal and provides it to another monitor for viewing of the augmented signal by, e.g., a client or director, to enable real time evaluation of the visual effects incorporated into the augmented signal. An exemplary embodiment of a processor suitable for providing the function of processor 120 in Figure 1 or 2, the real-time rendering at step 350 in Figure 3, and the processor included in unit 420 of Figure 4 may be a processor providing capability such as provided by a video game engine. An exemplary embodiment of a tracking function suitable for generating tracking information as described above in regard to tracker function 110 in Figures 1 and 2 and generating tracking information at step 320 of Figure 3 is described further below.

Figure 5 illustrates an exemplary embodiment of a planar target that may be mounted in various locations of the tracked object to enable tracking. Each one of a plurality of targets has a unique identifying pattern and accurate two-dimensional corners. Such targets enable fully automatic detection for tracking. For example, images of the targets in the video feed may be associated with time and coordinate data, e.g., GPS data, captured along with the video feed. In addition to tracking, other potential use cases provided by a plurality of such targets include pose estimation and camera calibration. An exemplary embodiment of targets such as that shown in Figure 5 is a target provided by AprilTag. Other approaches to tracking may also be used such as light-based tracking, e.g., lighthouse tracking by Valve.

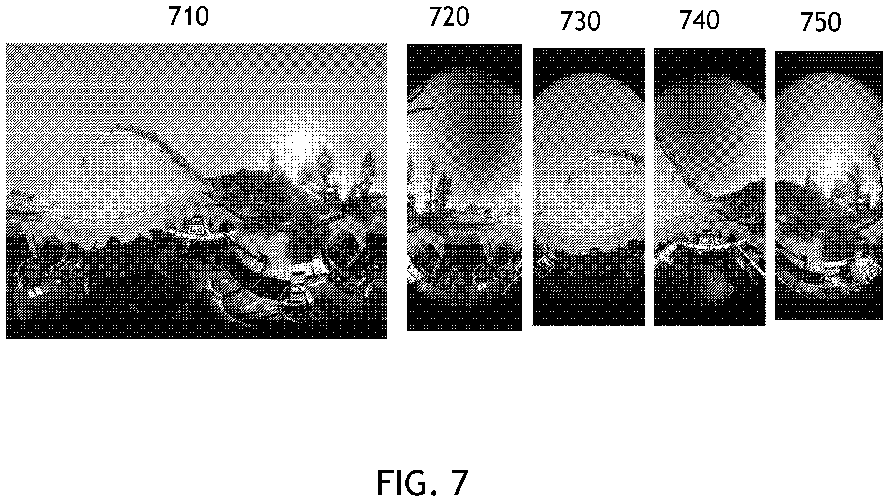

Figure 7 illustrates an example of the multiple signals produced by camera or sensor array 240 of Figures 1 and 2 and the result of stitching the signals together to produced a stiched signal, e.g., at step 340 of the method shown in Figure 3. Images 720, 730, 740, and 750 in Figure 7 correspond to images captured by an exemplary camera array including four cameras. Each of images 720, 730, 740, and 750 correspond to images or video captured by a respective one of the four cameras included in the camera array. Image 710 illustrates the result of stitching to produce a stitched signal incorporating the information from all four of images 720, 730, 740 and 750. In accordance with an aspect of the present principles, the stitching occurs in real time.

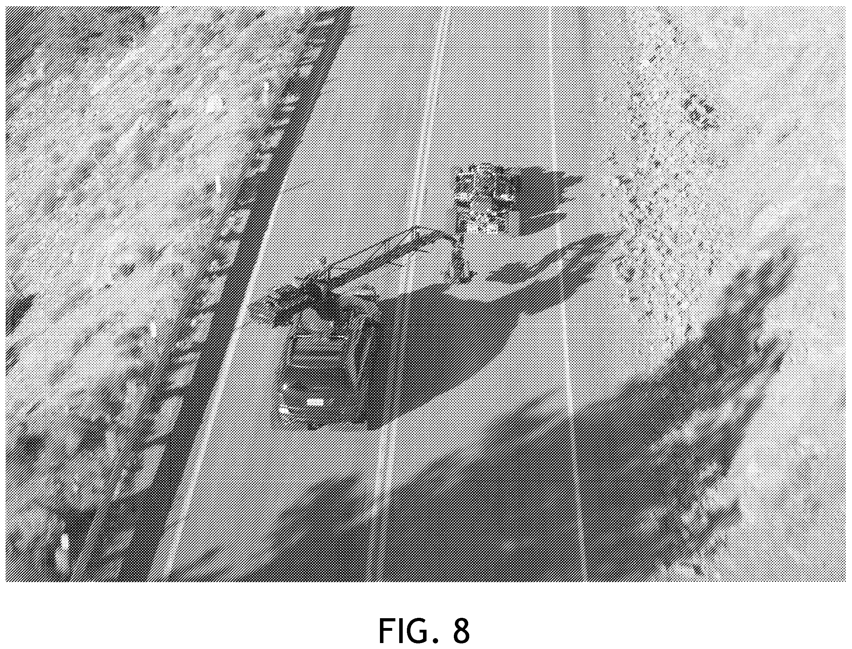

Figure 8 illustrates an exemplary embodiment in accordance with the present principles. In Figure 8, the vehicle in the right lane of the highway corresponds to a tracked object. The vehicle in the left lane provides the hero camera mounted on the boom extending in front of the vehicle in the left lane. Although unclear from the image in Figure 8, a camera array such as array 240 in a configuration such as the exemplary arrangement shown in Figure 6 is mounted at the top center of the vehicle in the right lane, i.e., the tracked object. Reflection and lighting information signals produced by that camera array are stitched in real time by a processor on the tracked object and the resulting stitched signal is transmitted wirelessly to the vehicle in the left lane. Processing capability in the vehicle in the left lane processes the signal from the hero camera mounted on the boom and the stitched signal received from the tracked object to produce a rendered augmented signal in real time as described herein. This enables, for example, a director riding in the vehicle in the left lane to view the augmented signal on a monitor in the vehicle in the left lane and see in real time the appearance of the virtual object in the real-world surroundings of the tracked object including the photorealistic reflection and lighting environment visual effects produced as described herein.

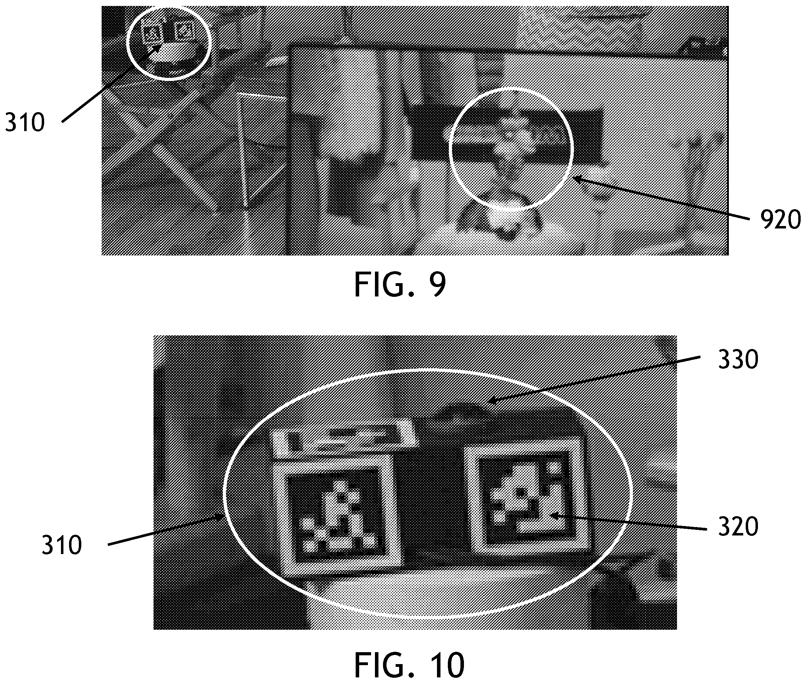

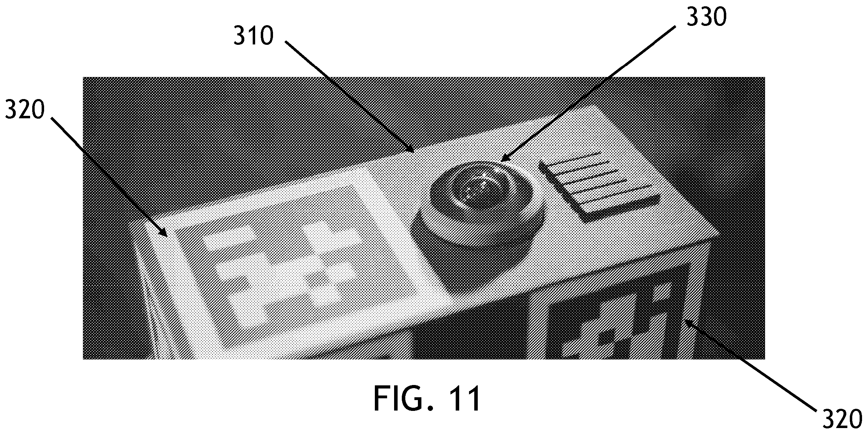

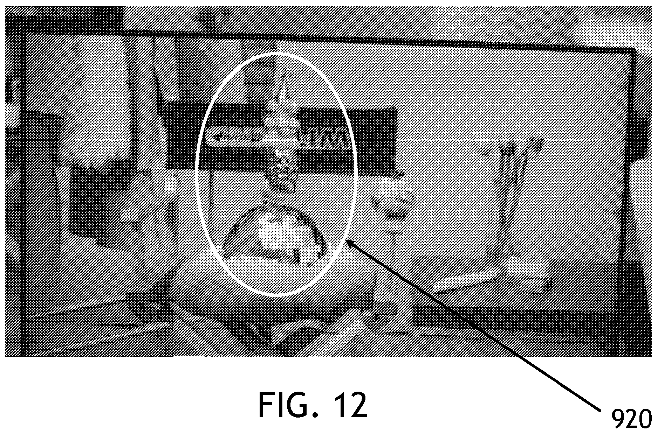

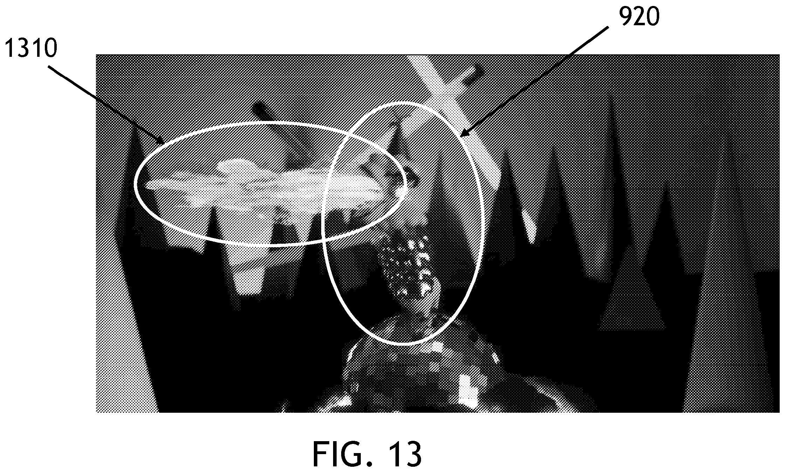

In accordance with the claimed invention the tracked object includes one or more light sources to emit light from the tracked object. For example, the desired visual effects may include inserting a virtual object that is light emitting, e.g., a reflective metal torch with a fire on the end. If so, one or more lights or light sources, e.g., an array of lights or light sources, may be included in the tracked object. Light from such light sources that is emitted from the tracked object is in addition to any light reflected from the tracked object due to light incident on the tracked object from the lighting environment of the tracked object. The lights or light sources included in a tracked object may be any of various types of light sources, e.g., LEDs, incandescent, fire or flames, etc. If multiple lights or light sources are included in the tracked object, e.g., in an array of light sources, for an application then more than one type of light source may be included, e.g., to provide a mix of different colors, intensities, etc. of light. An array of lights would also enable movement of the lighting from the tracked object, e.g., a sequence of different lights in the array turning on or off, and/or flickering such as for a flame. That is, an array of lights may be selected and configured to emit light from the tracked object that matches the color, directionality, intensity, movement and variations of these parameters of the light emitted from the virtual object. Having the tracked object emit light that matches that emitted from the virtual object further increases the accuracy of the reflection and lighting environment information captured by an array of sensors or cameras 240 described above, thereby increasing the realism of the augmented signal including the virtual object. As an example, Figure 9 illustrates an exemplary embodiment of a tracked object 310 shown in more detail in Figure 10. Also in Figure 9, following processing of image signals in accordance with the present principles, a virtual object 920 replaces the tracked object in the rendered image produced on a display device. The exemplary tracked object shown in Figure 10 includes one or more targets 320 and a fisheye lens 330 such as those described above in regard to Figures 5 and 6. Enlarged images of the exemplary tracked object and the virtual object shown in Figures 9 and 10 are shown in Figures 11 and 12. Figure 13 depicts light 1310 being emitted by virtual object 920. As described above, in accordance with the present principles, such effects may be produced with enhanced realism in the rendered image by including one or more light sources in the tracked object.

It is to be appreciated that the various features shown and described are interchangeable, that is a feature shown in one embodiment may be incorporated into another embodiment.

Although embodiments which incorporate the teachings of the present disclosure have been shown and described in detail herein, the present description illustrates the present principles. It will thus be appreciated that those skilled in the art can readily devise many other varied embodiments that still incorporate these teachings. Having described embodiments which are intended to be illustrative and not limiting, it is noted that modifications and variations can be made by persons skilled in the art in light of the above teachings. It is therefore to be understood that changes may be made in the particular embodiments disclosed which are within the scope of the appended claims.

All examples and conditional language recited herein are intended for pedagogical purposes to aid the reader in understanding the present principles and the concepts contributed by the inventor(s) to furthering the art and are to be construed as being without limitation to such specifically recited examples and conditions.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, peripheral interface hardware, memory such as read-only memory ("ROM") for storing software, random access memory ("RAM"), and non-volatile storage, and other hardware implementing various functions as will be apparent to one skilled in the art.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

Herein, the phrase "coupled" is defined to mean directly connected to or indirectly connected with through one or more intermediate components. Such intermediate components may include both hardware and software-based components.

**In** the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

It is to be understood that the teachings of the present principles may be implemented in various forms of hardware, software, firmware, special purpose processors, or combinations thereof. For example, various aspects of the present principles may be implemented as a combination of hardware and software. Moreover, the software may be implemented as an application program tangibly embodied on a program storage unit. The application program may be uploaded to, and executed by, a machine comprising any suitable architecture. The machine may be implemented on a computer platform having hardware such as one or more central processing units ("CPU"), a random-access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings may be implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications may be effected therein by one of ordinary skill in the pertinent art without departing from the appended claims.

## Claims

1. A method comprising:
receiving a first video signal from a first camera (230) providing video of an object (250, 310);
tracking the object to produce tracking information indicating a movement of the object;
receiving a second video signal including video information corresponding to a stitching together of a plurality of output signals from respective ones of a plurality of cameras included in a camera array (240) mounted on the object, wherein the second video signal captures at least one of a reflection on the object and a lighting environment of the object; and
processing the first video signal, the tracking information, and the second video signal to generate a rendered signal representing video in which the tracked object has been replaced in real time with a virtual object (920) having one or more of the reflections and the lighting environment of the tracked object,
the tracked object including at least one light source configured to emit light from the tracked object that matches parameters of the light emitted from the virtual object, wherein the light parameters comprise a color parameter, a directionality parameter and an intensity parameter of a light emitted from the virtual object.

2. An apparatus comprising one or more processors configured to:
receive a first video signal from a first camera (230) providing video of an object (250, 310);
track the object to produce tracking information indicating a movement of the object, wherein a camera array (240) including a plurality of cameras is mounted on the object;
receive a second video signal including video information corresponding to a stitching together of a plurality of output signals from respective ones of the plurality of cameras included in the camera array, wherein the second video signal captures at least one of a reflection on the tracked object and a lighting environment of the tracked object; and
process the first video signal, the tracking information, and the second video signal to generate a rendered signal representing video in which the tracked object has been replaced in real time with a virtual object (920) having at least one of the reflection and the lighting environment of the tracked object
the tracked object including at least one light source configured to emit light from the tracked object that matches parameters of the light emitted from the virtual object, wherein the light parameters comprise a color parameter, a directionality parameter and an intensity parameter of a light emitted from the virtual object.

3. A system comprising:
a first camera (230) producing a first video signal providing video of an object (250, 310);
a camera array (240) including a plurality of cameras mounted on the object and having a first processor processing a plurality of output signals from respective ones of the plurality of cameras included in the camera array to produce a second video signal representing a stitching together of the plurality of output signals, wherein the second video signal includes information representing at least one of a reflection on the object and a lighting environment of the object;
a second camera tracking the object and producing tracking information indicating a movement of the object; and
a second processor processing the first video signal, the tracking information, and the second video signal to generate in real time a rendered signal representing video in which the tracked object has been replaced with a virtual object having at least one of the reflection and the lighting environment of the object
the tracked object including at least one light source configured to emit light from the tracked object that matches parameters of the light emitted from the virtual object, wherein the light parameters comprise a color parameter, a directionality parameter and an intensity parameter of a light emitted from the virtual object.

4. The method of claim 1 or apparatus of claim 2 or system of claim 3 wherein the processing of the first video signal includes incorporating information from a sensor in real time, wherein the information from the sensor represents reflections and/or lighting from one or more sources to produce a visual effect including the virtual object.

5. The method or apparatus or system of claim 4 wherein the information from the sensor comprises information from at least one of a light sensor and an image sensor.

6. The method or apparatus or system of any of claims 4 to 5 wherein the information from the sensor comprises information from one or more sensors locationally distinct from a camera providing a video feed or image information to be augmented to produce augmented reality content.

7. The method or apparatus or system of claim 6 wherein the video feed or image information to be augmented comprises a video feed or image information being provided to a wearable device worn by a user whose vision is being augmented in mixed reality.

8. The method or apparatus or system of any of claims 4 to 7 further comprising calculating, using information from the sensor, at least one of a light map and a reflection map for one or more virtual objects locationally distinct from the sensor.

9. The method or apparatus or system of any of claims 4 to 8 further comprising communicating at least one of lighting information and reflection information using at least one of a wired connection and a wireless connection.

10. The method or apparatus or system of any of claims 4 to 9 further comprising modifying the lighting of a virtual object in real time using sampled real-world light sources.

11. The method or apparatus or system of any of claims 4 to 10 wherein the processing includes producing a positional matrix representing a placement of the virtual object responsive to the tracking information and generating the rendered signal including the virtual object responsive to the positional matrix.

12. The method or apparatus or system of any of claims 4 to 11 wherein tracking the object comprises calibrating a lens of the first camera using at least one of one or more fiducials affixed to the tracked object and a separate and unique lens calibration chart.

13. The method or apparatus or system of any of claims 4 to 12 wherein processing includes processing the stitched output signal to perform image-based lighting in the rendered signal.

14. A non-transitory computer readable medium storing executable program instructions to cause the apparatus of claim 2 or the system of claim 3 executing the instructions to perform a method according to any of claims 1 and 4 to 13.

## Patentansprüche

1. Verfahren, umfassend:
Empfangen eines ersten Videosignals von einer ersten Kamera (230), die Video eines Objekts liefert;
Verfolgen des Objekts, um eine Trackinginformation zu erzeugen, die eine Bewegung des Objekts anzeigt;
Empfangen eines zweiten Videosignals, das Videoinformationen umfasst, die einem Zusammenfügen einer Vielzahl von Ausgangssignalen von jeweiligen einer Vielzahl von Kameras entsprechen, die in einem an dem Objekt angebrachten Kameraarray (240) enthalten sind, wobei das zweite Videosignal mindestens eines von einer Reflexion auf dem Objekt und einer Beleuchtungsumgebung des Objekts erfasst; und
Verarbeiten des ersten Videosignals, der Trackinginformation und des zweiten Videosignals, um ein gerendertes Signal zu erzeugen, das Video darstellt, in dem das verfolgte Objekt in Echtzeit durch ein virtuelles Objekt (920) ersetzt wurde, das eine oder mehrere der Reflexionen und der Beleuchtungsumgebung des verfolgten Objekts aufweist,
wobei das verfolgte Objekt mindestens eine Lichtquelle umfasst, die dazu ausgebildet ist, Licht von dem verfolgten Objekt zu emittieren, das Parametern des von dem virtuellen Objekt emittierten Lichts entspricht, wobei die Lichtparameter einen Farbparameter, einen Richtungsparameter und einen Intensitätsparameter eines von dem virtuellen Objekt emittierten Lichts umfassen.

2. Vorrichtung, umfassend einen oder mehrere Prozessoren, die dazu ausgebildet sind:
ein erstes Videosignal von einer ersten Kamera (230) zu empfangen, die Video eines Objekts liefert;
das Objekt zu verfolgen, um eine Trackinginformation zu erzeugen, die eine Bewegung des Objekts anzeigt, wobei ein Kameraarray (240), das eine Vielzahl von Kameras umfasst, an dem Objekt angebracht ist;
ein zweites Videosignal zu empfangen, das Videoinformationen umfasst, die einem Zusammenfügen einer Vielzahl von Ausgangssignalen von jeweiligen der Vielzahl von Kameras entsprechen, die in dem Kameraarray enthalten sind, wobei das zweite Videosignal mindestens eines von einer Reflexion auf dem verfolgten Objekt und einer Beleuchtungsumgebung des verfolgten Objekts erfasst; und
das erste Videosignal, die Trackinginformation und das zweite Videosignal zu verarbeiten, um ein gerendertes Signal zu erzeugen, das Video darstellt, in dem das verfolgte Objekt in Echtzeit durch ein virtuelles Objekt (920) ersetzt wurde, das mindestens eines der Reflexion und der Beleuchtungsumgebung des verfolgten Objekts aufweist,
wobei das verfolgte Objekt mindestens eine Lichtquelle umfasst, die dazu ausgebildet ist, Licht von dem verfolgten Objekt zu emittieren, das Parametern des von dem virtuellen Objekt emittierten Lichts entspricht, wobei die Lichtparameter einen Farbparameter, einen Richtungsparameter und einen Intensitätsparameter eines von dem virtuellen Objekt emittierten Lichts umfassen.

3. System, umfassend:
eine erste Kamera (230), die ein erstes Videosignal erzeugt, das Video eines Objekts (250, 310) liefert;
ein Kameraarray (240), das eine Vielzahl von Kameras umfasst, die an dem Objekt angebracht sind, und einen ersten Prozessor aufweist, der eine Vielzahl von Ausgangssignalen von jeweiligen der Vielzahl von Kameras verarbeitet, die in dem Kameraarray enthalten sind, um ein zweites Videosignal zu erzeugen, das ein Zusammenfügen der Vielzahl von Ausgangssignalen darstellt, wobei das zweite Videosignal Informationen umfasst, die mindestens eines von einer Reflexion auf dem Objekt und einer Beleuchtungsumgebung des Objekts darstellen;
eine zweite Kamera, die das Objekt verfolgt und eine Trackinginformation erzeugt, die eine Bewegung des Objekts anzeigt; und
einen zweiten Prozessor, der das erste Videosignal, die Trackinginformation und das zweite Videosignal verarbeitet, um in Echtzeit ein gerendertes Signal zu erzeugen, das Video darstellt, in dem das verfolgte Objekt durch ein virtuelles Objekt ersetzt wurde, das mindestens eines der Reflexion und der Beleuchtungsumgebung des Objekts aufweist,
wobei das verfolgte Objekt mindestens eine Lichtquelle umfasst, die dazu ausgebildet ist, Licht von dem verfolgten Objekt zu emittieren, das Parametern des von dem virtuellen Objekt emittierten Lichts entspricht, wobei die Lichtparameter einen Farbparameter, einen Richtungsparameter und einen Intensitätsparameter eines von dem virtuellen Objekt emittierten Lichts umfassen.

4. Verfahren nach Anspruch 1 oder Vorrichtung nach Anspruch 2 oder System nach Anspruch 3, wobei das Verarbeiten des ersten Videosignals das Einbeziehen von Informationen von einem Sensor in Echtzeit umfasst, wobei die Informationen von dem Sensor Reflexionen und/oder Beleuchtung von einer oder mehreren Quellen darstellen, um einen visuellen Effekt einschließlich des virtuellen Objekts zu erzeugen.

5. Verfahren oder Vorrichtung oder System nach Anspruch 4, wobei die Informationen von dem Sensor Informationen von mindestens einem von einem Lichtsensor und einem Bildsensor umfassen.

6. Verfahren oder Vorrichtung oder System nach einem der Ansprüche 4 bis 5, wobei die Informationen von dem Sensor Informationen von einem oder mehreren Sensoren umfassen, die örtlich getrennt von einer Kamera sind, die einen Videostrom oder Bildinformationen liefert, die erweitert werden sollen, um Augmented-Reality-Inhalt zu erzeugen.

7. Verfahren oder Vorrichtung oder System nach Anspruch 6, wobei der zu erweiternde Videostrom oder die zu erweiternden Bildinformationen einen Videostrom oder Bildinformationen umfassen, die einer von einem Benutzer getragenen tragbaren Vorrichtung bereitgestellt werden, dessen Sicht in Mixed Reality erweitert wird.

8. Verfahren oder Vorrichtung oder System nach einem der Ansprüche 4 bis 7, ferner umfassend ein Berechnen, unter Verwendung von Informationen von dem Sensor, mindestens einer von einer Lichtkarte und einer Reflexionskarte für ein oder mehrere virtuelle Objekte, die örtlich getrennt von dem Sensor sind.

9. Verfahren oder Vorrichtung oder System nach einem der Ansprüche 4 bis 8, ferner umfassend das Übermitteln mindestens einer von Beleuchtungsinformationen und Reflexionsinformationen unter Verwendung mindestens einer von einer drahtgebundenen Verbindung und einer drahtlosen Verbindung.

10. Verfahren oder Vorrichtung oder System nach einem der Ansprüche 4 bis 9, ferner umfassend das Modifizieren der Beleuchtung eines virtuellen Objekts in Echtzeit unter Verwendung von abgetasteten Lichtquellen aus der realen Welt.

11. Verfahren oder Vorrichtung oder System nach einem der Ansprüche 4 bis 10, wobei das Verarbeiten das Erzeugen einer Positionsmatrix, die eine Platzierung des virtuellen Objekts in Abhängigkeit von der Trackinginformation darstellt, und das Erzeugen des gerenderten Signals einschließlich des virtuellen Objekts in Abhängigkeit von der Positionsmatrix umfasst.

12. Verfahren oder Vorrichtung oder System nach einem der Ansprüche 4 bis 11, wobei das Verfolgen des Objekts das Kalibrieren eines Objektivs der ersten Kamera unter Verwendung mindestens einer von einer oder mehreren an dem verfolgten Objekt angebrachten Referenzmarken und einer separaten und eindeutigen Objektivkalibriertafel umfasst.

13. Verfahren oder Vorrichtung oder System nach einem der Ansprüche 4 bis 12, wobei das Verarbeiten das Verarbeiten des zusammengefügten Ausgangssignals umfasst, um eine bildbasierte Beleuchtung in dem gerenderten Signal durchzuführen.

14. Nichtflüchtiges computerlesbares Medium, das ausführbare Programmanweisungen speichert, um zu veranlassen, dass die Vorrichtung nach Anspruch 2 oder das System nach Anspruch 3 die Anweisungen ausführt, um ein Verfahren nach einem der Ansprüche 1 und 4 bis 13 durchzuführen.

## Revendications

1. Procédé comprenant :
la réception d'un premier signal vidéo provenant d'une première caméra (230) fournissant une vidéo d'un objet (250, 310) ;
le suivi de l'objet afin de produire des informations de suivi indiquant un mouvement de l'objet ;
la réception d'un deuxième signal vidéo comprenant des informations vidéo correspondant à un assemblage d'une pluralité de signaux de sortie provenant de caméras respectives d'une pluralité de caméras comprises dans un réseau de caméras (240) monté sur l'objet, le deuxième signal vidéo capturant au moins un reflet sur l'objet et/ou un environnement d'éclairage de l'objet ; et
le traitement du premier signal vidéo, des informations de suivi et du deuxième signal vidéo afin de générer un signal rendu représentant une vidéo dans laquelle l'objet suivi a été remplacé en temps réel par un objet virtuel (920) présentant les reflets et/ou l'environnement d'éclairage de l'objet suivi,
l'objet suivi comprenant au moins une source lumineuse configurée pour émettre, à partir de l'objet suivi, une lumière dont les paramètres correspondent à ceux de la lumière émise par l'objet virtuel, les paramètres d'éclairage comprenant un paramètre de couleur, un paramètre de directionnalité et un paramètre d'intensité d'une lumière émise par l'objet virtuel.

2. Appareil comprenant un ou plusieurs processeurs, configuré pour :
recevoir un premier signal vidéo provenant d'une première caméra (230) fournissant une vidéo d'un objet (250, 310) ;
suivre l'objet afin de produire des informations de suivi indiquant un mouvement de l'objet, un réseau de caméras (240) comprenant une pluralité de caméras étant monté sur l'objet ;
recevoir un deuxième signal vidéo comprenant des informations vidéo correspondant à un assemblage d'une pluralité de signaux de sortie provenant de caméras respectives de la pluralité de caméras comprises dans le réseau de caméras, le deuxième signal vidéo capturant au moins un reflet sur l'objet suivi et/ou un environnement d'éclairage de l'objet suivi ; et
traiter le premier signal vidéo, les informations de suivi et le deuxième signal vidéo afin de générer un signal rendu représentant une vidéo dans laquelle l'objet suivi a été remplacé en temps réel par un objet virtuel (920) présentant au moins le reflet et/ou l'environnement d'éclairage de l'objet suivi, l'objet suivi comprenant au moins une source lumineuse configurée pour émettre, à partir de l'objet suivi, une lumière dont les paramètres correspondent à ceux de la lumière émise par l'objet virtuel, les paramètres d'éclairage comprenant un paramètre de couleur, un paramètre de directionnalité et un paramètre d'intensité de la lumière émise par l'objet virtuel.

3. Système comprenant :
une première caméra (230) produisant un premier signal vidéo fournissant un vidéo d'un objet (250, 310) ;
un réseau de caméras (240) comprenant une pluralité de caméras, monté sur l'objet et comportant un premier processeur traitant une pluralité de signaux de sortie provenant de caméras respectives de la pluralité de caméras comprises dans le réseau de caméras afin de produire un deuxième signal vidéo représentant un assemblage de la pluralité de signaux de sortie, le deuxième signal vidéo comprenant des informations représentant au moins un reflet sur l'objet et/ou un environnement d'éclairage de l'objet ;
une deuxième caméra suivant l'objet et produisant des informations de suivi indiquant un mouvement de l'objet ; et
un deuxième processeur traitant le premier signal vidéo, les informations de suivi et le deuxième signal vidéo pour générer en temps réel un signal rendu représentant une vidéo dans lesquelles l'objet suivi a été remplacé par un objet virtuel présentant au moins le reflet et/ou l'environnement d'éclairage de l'objet,
l'objet suivi comprenant au moins une source lumineuse configurée pour émettre, à partir de l'objet suivi, une lumière dont les paramètres correspondent à ceux de la lumière émise par l'objet virtuel, les paramètres d'éclairage comprenant un paramètre de couleur, un paramètre de directionnalité et un paramètre d'intensité de la lumière émise par l'objet virtuel.

4. Procédé selon la revendication 1 ou appareil selon la revendication 2 ou système selon la revendication 3, dans lequel le traitement du premier signal vidéo comprend l'intégration en temps réel d'informations provenant d'un capteur, lesdites informations provenant du capteur représentant des reflets et/ou un éclairage provenant d'une ou plusieurs sources afin de produire un effet visuel comprenant l'objet virtuel.

5. Procédé ou appareil ou système selon la revendication 4, dans lequel les informations provenant du capteur comprennent des informations provenant d'au moins un capteur de lumière et/ou un capteur d'image.

6. Procédé ou appareil ou système selon la revendication 4 ou 5, dans lequel les informations provenant du capteur comprennent des informations provenant d'un ou plusieurs capteurs positionnellement distincts par rapport à une caméra fournissant un flux vidéo ou des informations d'image à augmenter afin de produire un contenu de réalité augmentée.

7. Procédé ou appareil ou système selon la revendication 6, dans lequel le flux vidéo ou les informations d'image à augmenter comprennent un flux vidéo ou des informations d'image fournis à un dispositif portable porté par un utilisateur dont la vision est augmentée en réalité mixte.

8. Procédé ou appareil ou système selon l'une quelconque des revendications 4 à 7, comprenant en outre le calcul, à l'aide des informations provenant du capteur, d'au moins une carte d'éclairage et/ou une carte de reflets pour un ou plusieurs objets virtuels positionnellement distincts par rapport au capteur.

9. Procédé ou appareil ou système selon l'une quelconque des revendications 4 à 8, comprenant en outre la transmission d'au moins des informations sur l'éclairage et/ou des informations sur les reflets par l'intermédiaire d'au moins une connexion filaire et/ou une connexion sans fil.

10. Procédé ou appareil ou système selon l'une quelconque des revendications 4 à 9, comprenant en outre la modification en temps réel de l'éclairage d'un objet virtuel à l'aide de sources lumineuses réelles échantillonnées.

11. Procédé ou appareil ou système selon l'une quelconque des revendications 4 à 10, dans lequel le traitement comprend la production d'une matrice de position représentant un positionnement de l'objet virtuel qui est responsif aux informations de suivi, ainsi que la génération du signal rendu comprenant l'objet virtuel en réponse à la matrice de position.

12. Procédé ou appareil ou système selon l'une quelconque des revendications 4 à 11, dans lequel le suivi de l'objet comprend le calibrage d'un objectif de la première caméra à l'aide d'au moins un ou plusieurs repères fixés à l'objet suivi et/ou une mire de calibrage d'objectif distinct et unique.

13. Procédé ou appareil ou système selon l'une quelconque des revendications 4 à 12, dans lequel le traitement comprend le traitement du signal de sortie assemblé afin d'effectuer un éclairage basé sur l'image dans le signal rendu.

14. Support non transitoire lisible par ordinateur stockant des instructions de programme exécutables destinées à amener l'appareil selon la revendication 2 ou le système selon la revendication 3 exécutant lesdites instructions à mettre en œuvre un procédé selon l'une quelconque des revendications 1 et 4 à 13.
